# EUROPEAN PATENT APPLICATION

(11) **EP 1 642 802 A1**
(43) Date of publication of application: **05.04.2006**
(21) Application number: 05018058.7
(22) Date of filing: 19.08.2005
(51) Int. Cl.: B62B 9/14

(54) **Baby carriage provided with hood**

(30) Priority: 01.10.2004 JP 2004290042
(71) Applicant: Aprica Ikujikenkyukai Aprica Kassai Kabushikikaisha, Osaka-shi, Osaka 542-0082 (JP)
(72) Inventor: Kassai, Kenzou, Osaka-shi Osaka 542-0083 (JP); Ohnishi, Ichiro c/o Aprica Ikujikenkyukai Aprica, Chuo-ku Osaka-shi Osaka 542-0082 (JP)
(74) Representative: Oser, Andreas

(57) **Abstract**

A baby carriage (1) comprises a body frame (10) forming a fundamental configuration of a seat, and a hood (30). The body frame (10) comprises a pair of handrail members (11), a pair of front legs (12), a pair of rear legs (13), a seat supporting member (14), a pair of handrail supporting members (15), and an inverted U-shaped member (16) having lower ends connected to upper ends of the pair of handrail supporting members (15) and extending in a width direction. The inverted U-shaped member (16) has a function as the body frame (10) to enhance body rigidity and a function as a hood bone which supports the hood (30).

## Description

### BACKGROUND OF THE INVENTION

### 1. Field of the Invention

The present invention relates to a baby carriage provided with a hood and more particularly, to a baby carriage provided with a hood in which body rigidity is enhanced.

### 2. Description of the Background Art

The baby carriage provided with the hood is disclosed in Japanese Unexamined Patent Publication No. 61-139555 and Japanese Unexamined Patent Publication No.2002-187554, for example. According to the baby carriage provided with the hood disclosed in the above documents, the hood comprises a plurality of hood bones in the form of flat plates, and a hood cloth provided between the hood bones and it is detachably mounted on a body frame.

The hood of the conventional baby carriage provided with the hood is mounted on the body frame when it is necessary to be used, and it does not contribute to rigidity of the body frame.

It is important to enhance rigidity of the body frame to keep a seat configuration stable during movement in the baby carriage.

### SUMMARY OF THE INVENTION

It is an object of the present invention to provide a baby carriage provided with a hood in which body rigidity is enhanced.

A baby carriage provided with a hood according to the present invention is characterized in that an inverted U-shaped member which constitutes a body frame of the baby carriage and extends in a width direction is used as a hood bone on which a hood.cloth is set up.

According to the above constitution, since the inverted U-shaped member has a function as the body frame to enhance body rigidity and a function as the hood bone, there can be provided the baby carriage provided with the hood in which its rigidity is enhanced with a small number of parts.

According to one embodiment, the inverted U-shaped member which constitutes one part of the body frame of the baby carriage has a lower end detachably mounted on the rest of the body frame. According to this embodiment, the body rigidity can be enhanced by mounting the hood.

Preferably, the inverted U-shaped member is formed of a rigid pipe to function as the body frame to enhance the body rigidity.

According to one embodiment, the body frame of the baby carriage comprises a pair of handrail members, a pair of front legs having upper ends connected to the handrail members and lower ends having front wheels, a pair of rear legs having upper ends connected to the handrail members and lower ends having rear wheels, a seat supporting member supporting a seat part and having a front end connected to the front leg, a pair of handrail supporting members supporting the rear ends of the pair of handrail members and having lower ends connected to the seat supporting members, and the inverted U-shaped member having lower ends connected to upper ends of the pair of handrail supporting members. A hood cloth is set up on the inverted U-shaped member.

Preferably, a hood cloth supporting member for supporting the hood cloth is turnably mounted on the inverted U-shaped member. Thus, since an open angle of the hood cloth can be adjusted, it is convenient. According to one embodiment, the hood cloth supporting member comprises a first hood cloth supporting member positioned in front of the inverted U-shaped member and a second hood cloth supporting member positioned behind the inverted U-shaped member.

The baby carriage is provided with a push rod which can be changed over between a state in which the baby carriage is pushed from behind and a state in which the baby carriage is pushed face-to-face. In the case of the baby carriage provided with the hood, when the push rod is changed to the state in which the baby carriage is pushed face-to-face, the rigidity of the body frame forming the seat could be lowered. In such baby carriage, the inverted U-shaped member functioning as the hood bone contributes to keeping the body rigidity high when the push rod is changed to the face-to-face state.

The baby carriage is folded so that a dimension in a width direction is reduced, for example. In this kind of baby carriage, since the number of points to connect the members turnably is increased, the body rigidity could be lowered. In such baby carriage, the inverted U-shaped member functioning as the hood bone contributes to keeping the body rigidity high. In a case where the inverted U-shaped member is detachably mounted on the rest of the body frame, the inverted U-shaped member may be dismounted when the baby carriage is folded.

### BRIEF DESCRIPTION OF THE DRAWINGS

Fig. 1 is a schematic side view showing one embodiment of the present invention;
Fig. 2 is a view showing a state in which a lower end of a inverted U-shaped member is mounted on an upper end of a handrail supporting member;
Fig. 3 is a view showing a state before the lower end of the inverted U-shaped member is mounted on the upper end of the handrail supporting member; and
Fig. 4A is a view showing a sectional configuration of a member which forms the inverted U-shaped member;
Fig. 4B is a view showing the other example of a sectional configuration of a member which forms the inverted U-shaped member;
Fig. 4C is a view showing the other example of a sectional configuration of a member which forms the inverted U-shaped member; and
Fig. 4D is a view showing the other example of a sectional configuration of a member which forms the inverted U-shaped member.

### DESCRIPTION OF THE PREFERRED EMBODIMENTS

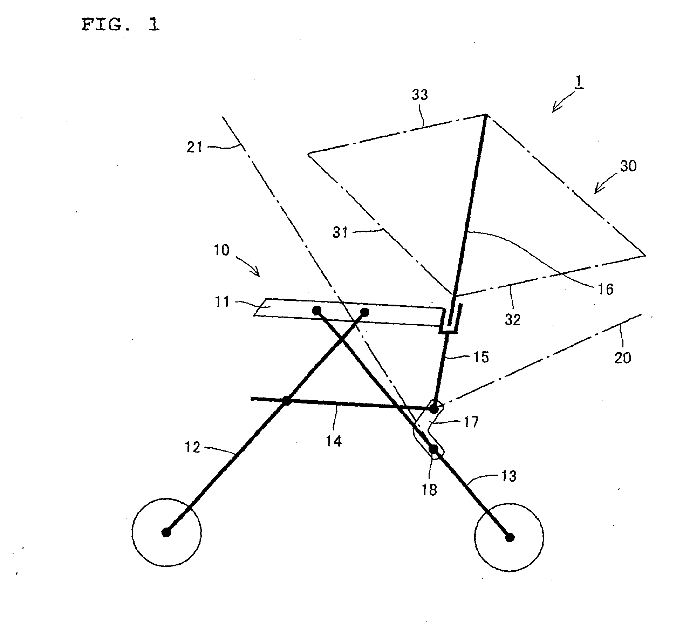

Fig. 1 schematically shows a baby carriage provided with a hood according to an embodiment of the present invention. The illustrated baby carriage 1 provided with the hood is folded by reducing its dimension in a width direction and in this folded state, font wheels and rear wheels come close to each other so that the baby carriage can stand by itself. In addition, a push rod 21 to move the baby carriage can be changed over between a state in which the baby carriage is pushed from behind and a state in which the baby carriage is pushed face-to-face.

The baby carriage 1 provided with the hood comprises a body frame 10 forming a configuration of a fundamental seat, and a hood 30 covering a top of the seat. The body frame 10 comprises a pair of handrail members 11 provided on both sides of the seat and extending back and forth, a pair of front legs 12 having front wheels at their lower parts, a pair of rear legs 13 having upper ends turnably connected to the handrail members 11 and having rear wheels at their lower parts, a seat supporting member 14 extending back and forth so as to support a seat part of the seat and having a front end turnably connected to the front leg 12, a pair of handrail supporting members 15 extending in a vertical direction and having lower ends turnably connected to the pair of seat supporting members 14 through a rolling bracket 17 and upper ends turnably connected to rear ends of the pair of handrail members 11, and an inverted U-shaped member 16 extending in a width direction and having lower ends fixed to the upper ends of the pair of handrail supporting members 15.

Referring to Fig. 1, the members which constitute the body frame are shown by solid lines and the members which do not constitute the body frame is shown by dashed lines. A backrest supporting member 20 is provided behind the seat supporting member 14 so as to be reclined backward. It is preferable that the backrest supporting member 20 can be reclined until a form of bed is taken. A lower end of the push rod 21 which can be changed over between the state in which the baby carriage is pushed from behind and the state in which the baby carriage is pushed face-to-face shown in Fig. 1 is connected to the rolling bracket 17.

The rolling bracket 17 has a lower end mounted on the rear leg 13 through a connection axis 18 so that it can be rolled. In an open state of the baby carriage 1 shown in Fig. 1, the rolling bracket 17 is positioned along a rear leg part positioned above the connection axis 18. In a folded state of the baby carriage 1 in which the front wheels and the rear wheels come close to each other so that the dimension in the width direction is reduced, the rolling bracket 17 is positioned along a rear leg part positioned below the connection axis 18.

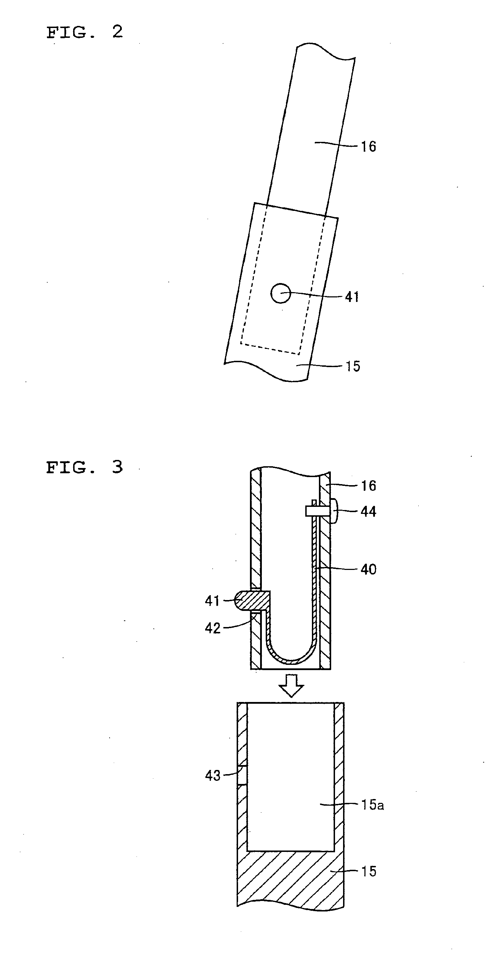

The lower ends of the inverted U-shaped member 16 are detachably mounted on the upper ends of the pair of handrail supporting members 15. This mounting manner will be described with reference to Figs. 2 and 3.

Fig. 2 shows a state in which the lower end of the inverted U-shaped member 16 is mounted on the upper end of the handrail supporting member 15 and a head of a lock pin 41 is exposed. The lock pin 41 prevents the inverted U-shaped member 16 from getting out upward. Fig. 3 shows a state before the inverted U-shaped member 16 is mounted on the handrail supporting member 15.

As shown in Fig. 3, an opening 15a to receive the lower end of the inverted U-shaped member 16 is formed in an upper part of the handrail member 15. A lock hole 43 is provided in a wall which forms the opening 15a.

According to the illustrated embodiment, the inverted U-shaped member 16 is in form of a pipe which comprises a plate spring 40 in its inside. The plate spring 40 has a base end fixed to an inner wall face of the inverted U-shaped member 16 through a screw 44 and a tip end having the lock pin 41. The lock pin 41 is provided so as to pass through a guide hole 42 and be exposed to the outside.

From the state shown in Fig. 3, the lower end of the inverted U-shaped member 16 is inserted to the opening 15a of the handrail supporting member 15 and the lock pin 41 engages with the lock hole 43. In the state in which the lock pin 41 engages with the lock hole 43, the inverted U-shaped member 16 is prevented from getting out upward. When the inverted U-shaped member 16 is removed, the head part of the lock pin 41 is pressed inside to disengage from the lock hole 43 and in this state, the inverted U-shaped member 16 is moved upward.

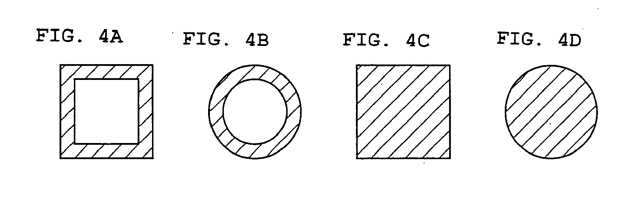

In order reduce the dimension in the width direction to fold the baby carriage 1, a connection member which can be bent and connects the pair of front legs 12, the pair of rear legs 13 and the pair of seat supporting members 14 is provided in the width direction. In order to keep body rigidity of such baby carriage high, the inverted U-shaped member 16 is preferably formed of a rigid pipe which cannot be bent. A configuration of the pipe may be an angular pipe shown in Fig. 4A or a round pipe shown in Fig. 4B. Alternatively, the inverted U-shaped member may be formed of a rigid angular rod shown in Fig. 4C or a rigid round rod shown in Fig. 4D. When the baby carriage 1 is folded, the inverted U-shaped member 16 is dismounted from the rest of the body frame.

An important characteristic of the illustrated embodiment is in that the inverted U-shaped member 16 serving as the body frame to enhance body rigidity is used as a hood bone of the hood 30. More specifically, a hood cloth 33 is provided on the inverted U-shaped member 16 to form the dome-shaped hood 30.

More preferably, in order to appropriately adjust the open state of the hood cloth 33, a lower end of an inverted U-shaped hood cloth supporting member which supports the hood cloth 33 is turnably mounted on the inverted U-shaped member 16. According to the illustrated embodiment, the hood cloth supporting member comprises a first hood cloth supporting member 31 positioned in front of the inverted U-shaped member 16, and a second hood cloth supporting member 32 positioned behind the inverted U-shaped member 16. More specifically, the first hood cloth supporting member 31 and the second hood cloth supporting member 32 are provided so that they can be fixed and kept in any angle position.

According to the above embodiment, the inverted U-shaped member 16 has the function as the body frame to enhance the body rigidity and the function as the hood bone. According to the conventional structure of the hood mounted on the baby carriage, although the inverted U-shaped member is used as the hood bone in some cases, the inverted U-shaped member only has the function for supporting the hood cloth and it does not contribute to enhancement of the rigidity of the body frame.

Although one embodiment of the present invention has been described with reference to the drawings, the present invention is not limited to the illustrated embodiment. Various kinds of modifications and variations can be added to the illustrated embodiment within the same or equivalent scope of the present invention.

For example, although the inverted U-shaped member 16 is detachably provided in the illustrated embodiment, it may not be detachable. In addition, although the push rod can be changed over between the state in which the baby carriage is pushed from behind and the state in which the baby carriage is pushed face-to-face in the above embodiment, a fixed push rod may be provided as another embodiment.

Furthermore, although the description has been made of the folding baby carriage which is folded so that its dimension in the width direction is reduced in the above embodiment, the present invention can be applied to a folding baby carriage in which the dimension in the width direction is not reduced or a baby carriage which cannot be folded.

The present invention can be advantageously used in the baby carriage provided with the hood in which the body rigidity is enhanced.

## Claims

1. A baby carriage provided with a hood **characterized in that** an inverted U-shaped member (16) which constitutes a body frame (10) of the baby carriage (1) and extends in a width direction is used as a hood bone on which a hood cloth (33) is set up.

2. The baby carriage provided with the hood according to claim 1, wherein said inverted U-shaped member (16) which constitutes one part of the body frame of the baby carriage has a lower end detachably mounted on the rest of the body frame.

3. The baby carriage provided with the hood according to claim 1 or 2, wherein said inverted U-shaped member (16) is formed of a rigid pipe.

4. The baby carriage provided with the hood according to any one of claims 1 to 3, wherein
the body frame of the baby carriage (1) comprises:
a pair of handrail members (11);
a pair of front legs (12) having upper ends connected to the handrail members and lower ends having front wheels;
a pair of rear legs (13) having upper ends connected to the handrail members and lower ends having rear wheels;
a seat supporting member (14) supporting a seat part and having a front end connected to said front legs;
a pair of handrail supporting members (15) supporting the rear ends of said pair of handrail members and having lower ends connected to said seat supporting members; and
said inverted U-shaped member (16) having lower ends connected to upper ends of said pair of handrail supporting members.

5. The baby carriage provided with the hood according to any one of claims 1 to 4, wherein a hood cloth supporting member (32) for supporting said hood cloth (33) is turnably mounted on said inverted U-shaped member.

6. The baby carriage provided with the hood according to claim 5, wherein said hood cloth supporting member (32) comprises a first hood cloth supporting member positioned in front of said inverted U-shaped member and a second hood cloth supporting member positioned behind said inverted U-shaped member.

7. The baby carriage provided with the hood according to any one of claims 1 to 6, wherein the baby carriage (1) is provided with a push rod (21) which can be changed over between a state in which the baby carriage is pushed from behind and a state in which the baby carriage is pushed face-to-face.

8. The baby carriage provided with the hood according to any one of claims 1 to 7, wherein the baby carriage (1) is folded so that a dimension in a width direction is reduced.
